# DEMANDE DE BREVET EUROPEEN

(11) **EP 4 016 825 A1**
(43) Date de publication de la demande: **22.06.2022**
(21) Numéro de dépôt: 21213144.5
(22) Date de dépôt: 08.12.2021
(51) Int. Cl.: H02M 1/36, H02M 7/06, H02M 7/12, H02M 1/32, H02M 7/217

(54) **CONVERTISSEUR DE TENSION**

(30) Priorité: 18.12.2020 FR 2013664
(71) Demandeur: STMicroelectronics (Tours) SAS, 37100 Tours (FR)
(72) Inventeur: HAGUE, Yannick, 37390 METTRAY (FR); RENARD, Benoit, 37110 Chateau-Renault (FR); LAUNOIS, Romain, 37000 TOURS (FR)
(74) Mandataire: Cabinet Beaumont

(57) **Abrégé**

La présente description concerne un convertisseur de tension comportant un circuit (401A) comprenant une association en parallèle, entre des premier (305) et deuxième (307) nœuds, d'une première branche comportant un premier élément (309) de redressement commandé présentant une première impédance et d'une deuxième branche comportant une résistance (303) associée en série avec un ou plusieurs deuxièmes éléments (403) de redressement présentant une deuxième impédance sensiblement égale à la première impédance.

## Description

### Domaine technique

La présente description concerne de façon générale les dispositifs électroniques. La présente description concerne plus particulièrement les convertisseurs de tension de type redresseur, ou convertisseurs alternatif-continu, permettant de fournir une tension redressée, par exemple sensiblement continue, à partir d'une source de tension alternative.

### Technique antérieure

On connaît de nombreux convertisseurs alternatif-continu comportant typiquement des éléments de redressement, commandables ou non, montés en pont redresseur, et au moins une capacité de filtrage, ou lissage, de la tension redressée. Ces convertisseurs sont notamment présents dans des alimentations à découpage que l'on trouve communément dans des écrans de télévision, des unités centrales d'ordinateurs de bureau, des luminaires, etc. Lors de la mise sous tension d'un dispositif comportant un tel convertisseur, la capacité de filtrage provoque, du fait de sa charge, un fort appel de courant. Cet appel de courant perturbe le réseau d'alimentation et endommage les éléments du convertisseur ainsi que les composants ou circuits du dispositif qui y sont reliés.

Afin de pallier ce problème, certains convertisseurs alternatif-continu comportent un circuit de limitation du courant d'appel. Une fois le courant établi, le circuit de limitation du courant d'appel est toutefois à l'origine d'une consommation électrique et d'un échauffement indésirables.

### Résumé de l'invention

Un mode de réalisation pallie tout ou partie des inconvénients des convertisseurs de tension connus.

Un objet des modes de réalisation décrits consiste à augmenter le rendement énergétique des convertisseurs de tension connus. Un autre objet des modes de réalisation décrits consiste à accroître la fiabilité des convertisseurs de tension connus.

Un mode de réalisation prévoit un convertisseur de tension comportant un circuit comprenant une association en parallèle, entre des premier et deuxième nœuds :
- d'une première branche comportant un premier élément de redressement commandé présentant une première impédance ; et
- d'une deuxième branche comportant une résistance associée en série avec un ou plusieurs deuxièmes éléments de redressement présentant une deuxième impédance sensiblement égale à la première impédance.

Selon un mode de réalisation, le premier élément de redressement commandé est un premier triac.

Selon un mode de réalisation, le premier élément de redressement commandé est un premier thyristor.

Selon un mode de réalisation, la deuxième branche comporte un seul deuxième élément de redressement.

Selon un mode de réalisation, le deuxième élément de redressement est commandé.

Selon un mode de réalisation, le deuxième élément de redressement est un deuxième triac.

Selon un mode de réalisation, la gâchette du deuxième triac est reliée, de préférence connectée, à la deuxième anode du deuxième triac.

Selon un mode de réalisation, les premier et deuxième triacs sont intégrés dans un même boîtier.

Selon un mode de réalisation, le deuxième élément de redressement commandé est un deuxième thyristor.

Selon un mode de réalisation, la gâchette du deuxième thyristor est reliée, de préférence connectée, à l'anode du deuxième thyristor.

Selon un mode de réalisation, le deuxième élément de redressement est une diode.

Selon un mode de réalisation, la résistance est en série avec une association en antiparallèle de première et deuxième diodes, l'association en antiparallèle des première et deuxième diode présentant la deuxième impédance.

Selon un mode de réalisation, la résistance est destinée à dissiper des courants d'appel.

Selon un mode de réalisation, la résistance est une thermistance à coefficient de température négatif.

Selon un mode de réalisation, le convertisseur comporte en outre :
- un pont redresseur ; et
- un condensateur.

Un mode de réalisation prévoit un dispositif comprenant un convertisseur tel que décrit.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma illustrant un exemple d'un convertisseur de tension ;
la figure 2A est un schéma illustrant un autre exemple d'un convertisseur de tension comportant un circuit de limitation de courant d'appel ;
la figure 2B est un schéma illustrant encore un autre exemple d'un convertisseur de tension comportant un circuit de limitation de courant d'appel ;
la figure 3A est un schéma illustrant un exemple de circuit de limitation de courant d'appel ;
la figure 3B est un schéma illustrant un autre exemple de circuit de limitation de courant d'appel ;
la figure 4A est un schéma illustrant un mode de réalisation d'un circuit de limitation de courant d'appel ;
la figure 4B est un schéma illustrant un autre mode de réalisation d'un circuit de limitation de courant d'appel ;
la figure 5A est un schéma illustrant une variante de réalisation du circuit de la figure 4A ;
la figure 5B est un schéma illustrant une variante de réalisation du circuit de la figure 4B ;
la figure 6A est un schéma illustrant un mode de réalisation d'un convertisseur de tension ;
la figure 6B est un schéma illustrant un autre mode de réalisation d'un convertisseur de tension ; et
la figure 7 représente un dispositif comportant un convertisseur de tension.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les applications possibles des convertisseurs de tension ne sont pas détaillées, les modes de réalisation décrits étant compatibles avec les applications usuelles mettant en œuvre des convertisseurs de tension.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

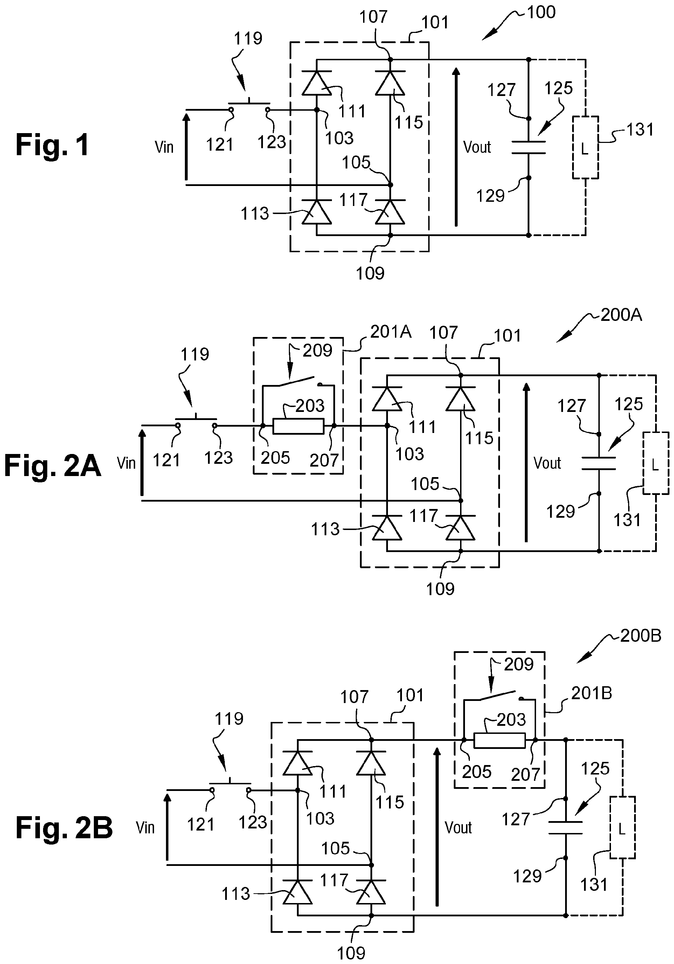

La figure 1 est un schéma illustrant un exemple d'un convertisseur 100 de tension.

Dans l'exemple représenté, le convertisseur de tension 100 comporte un pont redresseur 101. Le pont redresseur 101 reçoit, en entrée, une tension alternative Vin et fournit, en sortie, une tension redressée Vout.

La tension d'entrée Vin est par exemple une tension sinusoïdale. La tension Vin est par exemple une tension d'alimentation monophasée issue d'un réseau de distribution électrique (non représenté), par exemple le secteur. À titre d'exemple, la tension d'entrée Vin présente une valeur efficace égale à environ 230 V et une fréquence égale à environ 50 Hz, ou une valeur efficace égale à environ 110 V et une fréquence égale à environ 60 Hz.

Dans l'exemple illustré en figure 1, la tension d'entrée Vin est appliquée entre un premier nœud 103 et un deuxième nœud 105 du pont redresseur 101 du convertisseur 100. La tension de sortie Vout est par exemple disponible entre un troisième nœud 107 et un quatrième nœud 109 du pont redresseur 101 du convertisseur 100. Le nœud 109 du pont redresseur 101 est par exemple porté à un potentiel de référence, par exemple la masse.

Dans l'exemple représenté, le pont redresseur 101 du convertisseur 100 est de type à double alternance non commandé. Le pont redresseur 101 est plus précisément, dans cet exemple, un pont de diodes comprenant :
- une première diode 111, dont l'anode est connectée au nœud 103 et dont la cathode est connectée au nœud 107 ;
- une deuxième diode 113, dont l'anode est connectée au nœud 109 et dont la cathode est connectée au nœud 103 ;
- une troisième diode 115, dont l'anode est connectée au nœud 105 et dont la cathode est connectée au nœud 107 ; et
- une quatrième diode 117, dont l'anode est connectée au nœud 109 et dont la cathode est connectée au nœud 105.

Dans l'exemple représenté, le premier nœud 103 du pont redresseur 101 est relié au secteur par l'intermédiaire d'un interrupteur 119. L'interrupteur 119 comporte par exemple plus précisément une borne 121 connectée à un conducteur de phase du secteur et une autre borne 123 connectée au nœud 103 du pont 101. Le deuxième nœud 105 du pont redresseur 101 est, dans cet exemple, connecté au secteur, par exemple à un conducteur de neutre du secteur. L'interrupteur 119 est adapté à mettre le convertisseur 100 sous tension, c'est-à-dire à appliquer entre les nœuds 103 et 105 du pont 101 la tension Vin (aux chutes de tension près dans les conducteurs) fournie par le secteur.

Dans l'exemple représenté, le convertisseur 100 comporte en outre une capacité électrique 125, par exemple un condensateur. Le condensateur 125 est, dans cet exemple, connecté entre les nœuds 107 et 109 du pont redresseur 101. Le condensateur 125 comporte par exemple plus précisément une borne 127 connectée au nœud 107 et une autre borne 129 connectée au nœud 109. Le condensateur 125 est par exemple destiné à filtrer ou lisser la tension Vout. La tension de sortie Vout est alors par exemple une tension sensiblement continue.

La tension Vout permet par exemple d'alimenter une charge 131 (L), représentée en pointillé en figure 1, associée en parallèle du condensateur 125. La charge 131 est par exemple reliée ou connectée aux nœuds 107 et 109 du pont redresseur 101 du convertisseur 100.

À la mise sous tension du convertisseur 100, par exemple lorsque l'interrupteur 119 est commuté depuis un état ouvert vers un état fermé, le condensateur 125 produit une surintensité transitoire communément désignée par les termes courant d'appel (« inrush current », en anglais) ou appel de courant. Le courant d'appel, d'une intensité atteignant par exemple cinq à vingt fois celle du courant nominal, endommage notamment les diodes 111, 113, 115 et 117 du pont redresseur 101 à chaque mise sous tension. Cela nuit à la fiabilité du convertisseur 100. Le courant d'appel est en outre susceptible de détériorer le condensateur 125, de provoquer un non-respect des normes de papillotement et de perturber le réseau d'alimentation.

La figure 2A est un schéma illustrant un autre exemple d'un convertisseur de tension 200A. Le convertisseur de tension 200A de la figure 2A comprend des éléments communs avec le convertisseur de tension 100 de la figure 1. Ces éléments communs ne seront pas détaillés à nouveau ci-après.

Le convertisseur 200A de la figure 2A diffère du convertisseur 100 de la figure 1 principalement en ce que le convertisseur 200A comporte, outre le pont redresseur 101, un circuit 201A de limitation de courant d'appel.

Dans l'exemple représenté, le circuit 201A est situé à l'entrée du convertisseur 200A, côté tension alternative Vin. Dans cet exemple, le circuit 201A est plus précisément connecté entre le premier nœud 103 du pont redresseur 101 et la borne 123 de l'interrupteur 119.

Dans l'exemple représenté, le circuit 201A comporte une résistance 203. La résistance 203 du circuit 201A comporte par exemple une borne 205 connectée à la borne 123 de l'interrupteur 119 et une autre borne 207 connectée au nœud 103 du pont redresseur 101.

Dans l'exemple représenté, le circuit 201A comporte en outre un commutateur 209 associé en parallèle de la résistance 203, par exemple connecté entre les bornes 205 et 207 de la résistance 203. En position ouverte, le commutateur 209 force le passage du courant à travers la résistance 203.

En position fermée, le commutateur 209 connecte la borne 205 à la borne 207, ce qui a pour effet de court-circuiter la résistance 203. Le courant traverse alors majoritairement le commutateur 209.

À titre d'exemple, le commutateur 209 est un relais, par exemple un relais électromécanique unipolaire dont seul le contact de puissance est représenté en figure 2A.

À la mise sous tension du convertisseur 200A, par exemple lorsque l'interrupteur 119 est commuté en position fermée, le relais 209 est maintenu en position ouverte. Le courant traverse alors la résistance 203. La résistance 203 provoque une chute de tension entre ses bornes 205 et 207. Cela permet de limiter le courant d'appel lors de la charge du condensateur 125 à la mise sous tension.

Une fois le condensateur 125 chargé, par exemple au bout d'un délai suivant la mise sous tension du convertisseur 200A, le relais 209 est commuté en position fermée. Le courant circule alors principalement dans le relais 209. Cela permet au pont redresseur 101 du convertisseur 200A d'être parcouru par un courant nominal adapté en fonction de l'application.

La figure 2B est un schéma illustrant encore un autre exemple d'un convertisseur de tension 200B. Le convertisseur de tension 200B de la figure 2B comprend des éléments communs avec le convertisseur de tension 100 de la figure 1. Ces éléments communs ne seront pas détaillés à nouveau ci-après.

Le convertisseur 200B de la figure 2B diffère du convertisseur 100 de la figure 1 principalement en ce que le convertisseur 200B comporte un circuit 201B de limitation de courant d'appel situé à la sortie du pont redresseur 101, côté tension redressée Vout. Dans cet exemple, le circuit 201B est plus précisément connecté entre le troisième nœud 107 du pont redresseur 101 et la borne 127 du condensateur 125.

Le circuit 201B est par exemple identique au circuit 201A du convertisseur 200B de la figure 2A. Dans ce cas, la borne 205 de la résistance 203 du circuit 201B est connectée au nœud 107 du pont redresseur 101 et la borne 207 de la résistance 203 est connectée à la borne 127 du condensateur 125.

Le fonctionnement du circuit 201B du convertisseur 200B est similaire à celui du circuit 201A du convertisseur 200A tel que décrit précédemment en relation avec la figure 2A.

Un inconvénient des circuits 201A et 201B provient notamment de la présence du relais 209. Le relais 209 est en effet susceptible de s'user, par exemple par érosion de son contact de puissance à chaque commutation en charge. Cela nuit à la fiabilité du circuit 201A, 201B faisant partie du convertisseur 200A, 200B.

Le relais 209 émet par ailleurs un bruit, typiquement un claquement, à chaque commutation. Ce claquement s'avère déplaisant pour l'utilisateur et peut en outre perturber des systèmes de reconnaissance vocale situés à proximité du relais 209, par exemple intégrés au dispositif comportant le convertisseur 200A ou 200B.

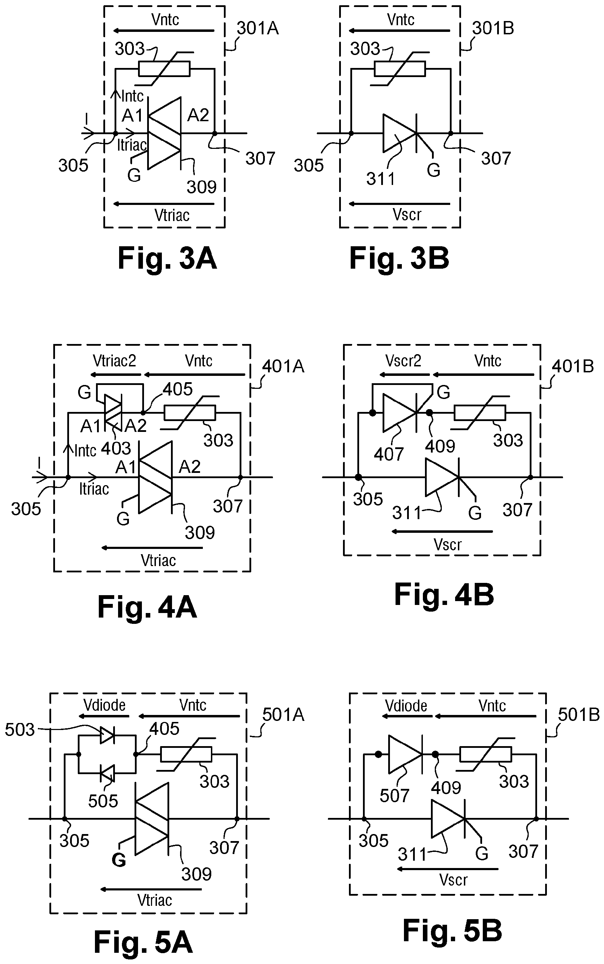

La figure 3A est un schéma illustrant un exemple de circuit 301A de limitation du courant d'appel.

Le circuit 301A de limitation du courant d'appel comporte une résistance 303. Dans l'exemple représenté, la résistance 303 est une thermistance, plus précisément une thermistance à coefficient de température négatif (« Negative Temperature Coefficient » - NTC, en anglais). La thermistance 303 est, dans cet exemple, connectée entre des nœuds 305 et 307 du circuit 301A.

Le circuit 301A comporte en outre un triac 309, par exemple associé en parallèle de la thermistance 303. Dans l'exemple représenté, le triac 309 a plus précisément sa première anode (A1) connectée au nœud 305 du circuit 301A et sa deuxième anode (A2) connectée au nœud 307 du circuit 301A. Par première anode d'un triac, on entend l'anode située du côté de la gâchette (G) du triac tandis que, par deuxième anode d'un triac, on entend l'anode opposée à la première anode.

Le circuit 301A illustré en figure 3A est par exemple destiné à remplacer le circuit 201A du convertisseur 200A de la figure 2A. Le nœud 305 du circuit 301A, analogue au nœud 205 du circuit 201A, est alors par exemple connecté à la borne 123 de l'interrupteur 119 tandis que le nœud 307 du circuit 301A, analogue au nœud 207 du circuit 201A, est par exemple connecté au nœud 103 du pont redresseur 101.

Le triac 309 est par exemple commuté entre des états passant et bloqué de façon analogue à ce qui a été décrit précédemment pour le relais électromécanique 209 du circuit 201A de la figure 2A. Plus précisément, le triac 309 est par exemple maintenu dans un état bloqué lors de la phase de mise sous tension du convertisseur, afin de forcer le passage du courant dans la thermistance 303. Une fois le condensateur 125 chargé, c'est-à-dire en régime établi, le triac 309 est alors commuté vers un état passant, par exemple en appliquant une impulsion de courant sur sa gâchette G. Le triac 309 laisse alors passer le courant dans les deux sens, à savoir depuis sa première anode A1 vers sa deuxième anode A2 et depuis sa deuxième anode A2 vers sa première anode A1.

À l'état passant, le triac 309 présente une impédance très inférieure à celle de l'état bloqué. Cette impédance à l'état passant est toutefois non nulle. Il en résulte que le triac 309 est à l'origine d'une chute de tension Vtriac entre les bornes 305 et 307 du circuit 301A. À titre d'exemple, la chute de tension Vtriac est de l'ordre de 1 V.

Du fait de son association en parallèle avec le triac 309, la thermistance 303 subit une chute de tension Vntc. La chute de tension Vntc est dans ce cas sensiblement égale à la chute de tension Vtriac, aux chutes de tension près dans les conducteurs.

La chute de tension Vntc présente aux bornes de la thermistance 303 lorsque le triac 309 est à l'état passant entraîne la circulation d'un courant Intc à travers la thermistance 303. À titre d'exemple, les inventeurs ont estimé que, pour un courant d'entrée I de l'ordre de 6 A parvenant au nœud 305, le triac 309 est parcouru par un courant Itriac de l'ordre de 4 A seulement, pour un courant Intc parcourant la thermistance 303 de l'ordre de 2 A.

Le courant Intc est responsable d'un échauffement de la thermistance 303 par effet Joule. Cet échauffement est à l'origine d'une forte baisse de rendement énergétique du convertisseur comportant le circuit 301A, et cause une usure prématurée de la thermistance 303. Dans l'exemple représenté, où la thermistance 303 est à coefficient de température négatif, l'échauffement de la thermistance 303 entraîne de surcroît une baisse de résistance tendant à amplifier le phénomène. Cette baisse de résistance favorise en effet le passage d'un courant Intc plus important dans la thermistance 303, donc un échauffement supplémentaire, et ainsi de suite.

La figure 3B est un schéma illustrant un autre exemple de circuit 301B de limitation de courant d'appel. Le circuit 301B de la figure 3B comprend des éléments communs avec le circuit 301A de la figure 3A. Ces éléments communs ne seront pas détaillés à nouveau ci-après.

Le circuit 301B de la figure 3B diffère du circuit 301A de la figure 3A principalement en ce que le circuit 301B comporte, à la place du triac 309, un thyristor 311. Dans l'exemple représenté, le thyristor 311 (« Silicon-Controlled Rectifier » - SCR, en anglais) a son anode connectée au nœud 305 du circuit 301B et sa cathode connectée au nœud 307 du circuit 301B.

Le circuit 301B illustré en figure 3B est par exemple destiné à remplacer le circuit 201B du convertisseur 200B de la figure 2B. Le nœud 305 du circuit 301B, analogue au nœud 205 du circuit 201B, est alors par exemple connecté au nœud 107 du pont redresseur 101, tandis que le nœud 307 du circuit 301B, analogue au nœud 207 du circuit 201B, est par exemple connecté à la borne 127 de la capacité 125.

Le thyristor 311 est par exemple commuté entre des états passant et bloqué de façon analogue à ce qui a été décrit précédemment pour le relais électromécanique 209 du circuit 201B de la figure 2B. Plus précisément, le thyristor 311 est par exemple maintenu dans un état bloqué lors de la phase de mise sous tension du convertisseur, afin de forcer le passage du courant dans la thermistance 303. Une fois le condensateur 125 chargé, c'est-à-dire en régime établi, le thyristor 311 est alors commuté vers un état passant, par exemple en appliquant une impulsion de courant sur sa gâchette G. Le thyristor laisse alors passer le courant dans un seul sens, à savoir depuis son anode vers sa cathode.

À l'état passant, le thyristor 311 présente une impédance très inférieure à celle de l'état bloqué. Cette impédance à l'état passant est toutefois non nulle. Il en résulte que le thyristor 311 est à l'origine d'une chute de tension Vscr entre les bornes 305 et 307 du circuit 301B.

Du fait de son association en parallèle avec le thyristor 311, la thermistance 303 subit une chute de tension Vntc sensiblement égale à la chute de tension Vscr, aux chutes de tension près dans les conducteurs. De façon analogue à ce qui a été décrit précédemment en relation avec la figure 3A, la chute de tension Vntc est à l'origine d'un échauffement de la thermistance 303, de sorte que le circuit 301B de la figure 3B présente des inconvénients semblables à ceux du circuit 301A de la figure 3A mentionnés ci-dessus.

La figure 4A est un schéma illustrant un mode de réalisation d'un circuit 401A de limitation de courant d'appel. Le circuit 401A de la figure 4A comprend des éléments communs avec le circuit 301A de la figure 3A. Ces éléments communs ne seront pas détaillés à nouveau ci-après.

Le circuit 401A de la figure 4A diffère du circuit 301A de la figure 3A principalement en ce que le circuit 401A comporte un autre triac 403 relié, de préférence connecté, entre le nœud 305 et la thermistance 303. Plus précisément, dans l'exemple représenté, le triac 403 a sa première anode A1 reliée, de préférence connectée, au nœud 305 et sa deuxième anode A2 reliée, de préférence connectée, à un nœud 405. La gâchette G du triac 403 est par exemple connectée au nœud 405, de sorte que le triac demeure commandé à l'état passant tant que le convertisseur comportant le circuit 401A est maintenu sous tension. La thermistance 303 est par exemple connectée entre les nœuds 405 et 307 du circuit 401A.

À titre d'exemple, le triac 403 présente un courant nominal de fonctionnement inférieur à celui du triac 309. Cela permet avantageusement de prévoir un triac 403 de dimensions plus faibles que le triac 309.

Selon ce mode de réalisation, le circuit 401A comprend ainsi une association en parallèle, entre les nœuds 305 et 307 :
- d'une première branche comportant un premier élément de redressement commandé, par exemple le triac 309 ; et
- d'une deuxième branche comportant une résistance, par exemple la thermistance 303, associée en série avec un deuxième élément de redressement, par exemple un élément de redressement commandé, par exemple le triac 403.

À titre d'exemple, les triacs 309 et 403 peuvent faire partie de composants distincts. Les triacs 309 et 403 sont par exemple intégrés dans des boîtiers séparés. En variante, les triacs 309 et 403 font partie d'un même composant. Les triacs 309 et 403 sont par exemple intégrés dans un même boîtier, le boîtier comprenant par exemple deux puces correspondant chacune à l'un des triacs 309 et 403.

À l'état passant, le triac 403 présente une impédance très inférieure à celle de l'état bloqué. Cette impédance à l'état passant est toutefois non nulle. Il en résulte que le triac 403 est à l'origine d'une chute de tension Vtriac2 entre les bornes 305 et 405 du circuit 401A.

Selon un mode de réalisation préféré, les triacs 309 et 403 présentent des impédances à l'état passant sensiblement égales. Il en résulte que la chute de tension Vtriac2 provoquée par le triac 403 est sensiblement égale, aux chutes de tension près dans les conducteurs, à la chute de tension Vtriac provoquée par le triac 309. Du fait de l'association en série du triac 403 et de la thermistance 303, la chute de tension Vntc aux bornes de la thermistance 303 est alors sensiblement nulle.

À titre d'exemple, les inventeurs ont estimé que, pour un courant d'entrée I de l'ordre de 6 A parvenant au nœud 305, le triac 309 est parcouru par un courant Itriac de l'ordre de 5,9 A, tandis que le courant Intc parcourant le triac 403 et la thermistance 303 est de l'ordre de 100 mA seulement.

Un avantage du circuit 401A tient au fait que le courant Intc parcourant la thermistance 303 est bien plus faible que dans le cas du circuit 301A. Il en résulte un échauffement moindre de la thermistance 303 dans le circuit 401A, donc une limitation de l'échauffement de l'air ambiant et une plus grande longévité.

La figure 4B est un schéma illustrant un autre mode de réalisation d'un circuit 401B de limitation de courant d'appel. Le circuit 401B de la figure 4B comprend des éléments communs avec le circuit 301B de la figure 3B. Ces éléments communs ne seront pas détaillés à nouveau ci-après.

Le circuit 401B de la figure 4B diffère du circuit 301B de la figure 3B principalement en ce que le circuit 401B comporte un autre thyristor 407 relié, de préférence connecté, entre le nœud 305 et la thermistance 303. Plus précisément, dans l'exemple représenté, le thyristor 407 a son anode reliée, de préférence connectée, au nœud 305 et sa cathode reliée, de préférence connectée, à un nœud 409. La gâchette G du thyristor 407 est par exemple connectée au nœud 305, de sorte que le thyristor demeure commandé à l'état passant tant que le convertisseur comportant le circuit 401B est maintenu sous tension. La thermistance 303 est par exemple connectée entre les nœuds 409 et 307 du circuit 401B.

À titre d'exemple, le thyristor 407 présente un courant nominal de fonctionnement inférieur à celui du thyristor 311. Cela permet avantageusement de prévoir un thyristor 407 de dimensions plus faibles que le thyristor 311.

Selon ce mode de réalisation, le circuit 401B comprend ainsi une association en parallèle, entre les nœuds 305 et 307 :
- d'une première branche comportant un premier élément de redressement commandé, par exemple le thyristor 311 ; et
- d'une deuxième branche comportant une résistance, par exemple la thermistance 303, associée en série avec un deuxième élément de redressement, par exemple un élément de redressement commandé, par exemple le thyristor 407.

À l'état passant, le thyristor 407 présente une impédance très inférieure à celle de l'état bloqué. Cette impédance à l'état passant est toutefois non nulle. Il en résulte que le thyristor 407 est à l'origine d'une chute de tension Vscr2 entre les bornes 305 et 409 du circuit 401B.

Selon un mode de réalisation préféré, les thyristors 311 et 407 présentent des impédances à l'état passant sensiblement égales. Il en résulte que la chute de tension Vscr2 provoquée par le thyristor 407 est sensiblement égale, aux chutes de tension près dans les conducteurs, à la chute de tension Vscr provoquée par le thyristor 311. Du fait de l'association en série du thyristor 407 et de la thermistance 303, la chute de tension Vntc aux bornes de la thermistance 303 est alors sensiblement nulle.

De façon analogue à ce qui a été décrit précédemment en relation avec la figure 4A, le courant circulant dans le thyristor 407 et dans la thermistance 303 est ainsi fortement réduit, de sorte que le circuit 401B de la figure 4B présente des avantages semblables à ceux du circuit 401A de la figure 4A mentionnés ci-dessus.

La figure 5A est un schéma illustrant un circuit 501A. Le circuit 501A correspond par exemple à une variante de réalisation du circuit 401A de la figure 4A. Dans cette variante, le triac 403 est remplacé par une association en antiparallèle de deux diodes 503 et 505 entre les nœuds 305 et 405. Dit autrement, les diodes 503 et 505 sont associées en parallèle et montées tête-bêche entre les nœuds 305 et 405 du circuit 501A. Dit encore autrement, les diodes 503 et 505 sont en parallèle et interconnectées par des électrodes opposées. Plus précisément, dans l'exemple représenté, la diode 503 a son anode connectée au nœud 305 et sa cathode connectée au nœud 405 tandis que la diode 505 a son anode connectée au nœud 405 et sa cathode connectée au nœud 305. Dans le circuit 501A de la figure 5A, les diodes 503 et 505 correspondent à deux éléments de redressement non commandés en antiparallèle.

L'association en antiparallèle des diodes 503 et 505 présente de préférence une impédance sensiblement égale à celle du triac 309 de sorte qu'elle est adaptée à produire, entre les nœuds 305 et 405, une chute de tension Vdiode sensiblement égale à la chute de tension Vtriac entre les nœuds 305 et 307. La variante de réalisation illustrée en figure 5A présente ainsi des avantages similaires à ceux décrits en relation avec la figure 4A.

La figure 5B est un schéma illustrant un circuit 501B. Le circuit 501B correspond par exemple à une variante de réalisation du circuit 401B de la figure 4B. Dans cette variante, le thyristor 407 est remplacé par une diode 507. La diode 507 est par exemple connectée entre les nœuds 305 et 409 du circuit 501B. Plus précisément, dans l'exemple représenté, la diode 507 a son anode connectée au nœud 305 et sa cathode connectée au nœud 409. Dans le circuit 501B de la figure 5B, la diode 507 constitue un élément de redressement non commandé.

La diode 507 présente de préférence une impédance sensiblement égale à celle du thyristor 311 de sorte qu'elle est adaptée à produire, entre les nœuds 305 et 409, une chute de tension Vdiode sensiblement égale à la chute de tension Vscr entre les nœuds 305 et 307. La variante de réalisation illustrée en figure 5B présente ainsi des avantages similaires à ceux décrits en relation avec la figure 4B.

Bien que cela n'ait pas été représenté, on pourrait prévoir de remplacer le thyristor 311 des circuits 401B et 501B des figures 4B et 5B par un triac, par exemple le triac 309 des circuits 401A et 501A des figures 4A et 5A. On pourrait en outre prévoir de remplacer le thyristor 407 du circuit 401B de la figure 4B par un triac, par exemple semblable au triac 403 de la figure 4A. Dans ces deux cas, on obtiendrait des avantages similaires à ceux décrits précédemment en relation avec les figures 4B et 5B.

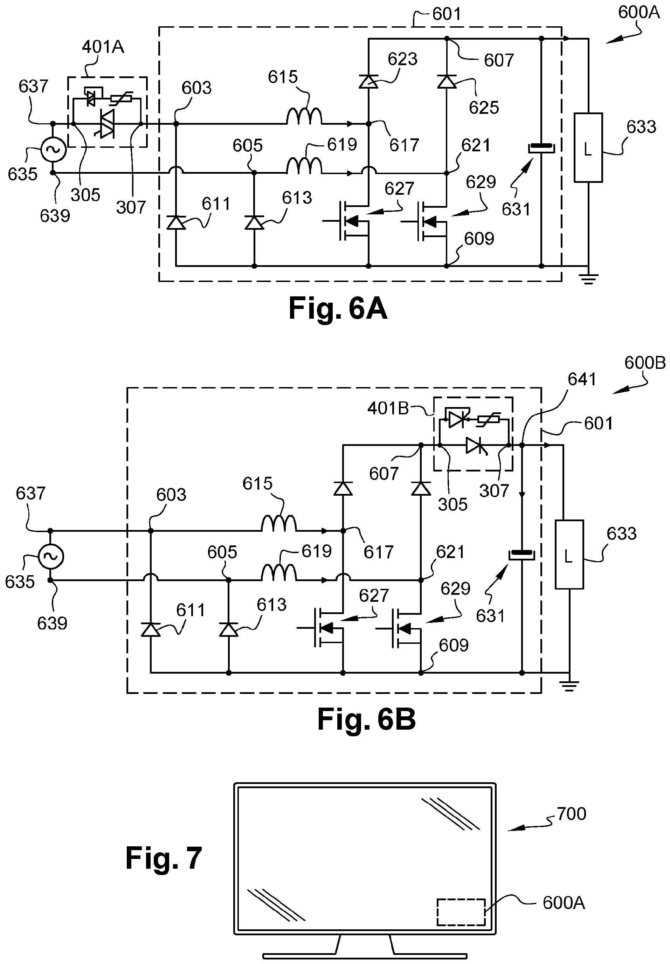

La figure 6A est un schéma illustrant un mode de réalisation d'un convertisseur 600A de tension. La figure 6A représente plus précisément un autre exemple d'implémentation du circuit 401A de limitation de courant d'appel de la figure 4A.

Dans l'exemple représenté, le convertisseur de tension 600A comporte un pont redresseur 601 de type mixte, c'est-à-dire comprenant des éléments de redressement non commandés et des éléments de redressement commandés. Le pont redresseur 601 est plus précisément un pont mixte symétrique présentant deux nœuds 603, 605 d'entrée et deux nœuds 607, 609 de sortie. Dans l'exemple représenté, le pont redresseur 601 comporte :
- une première diode 611, dont l'anode est connectée au nœud 609 et dont la cathode est connectée au nœud 603 ;
- une deuxième diode 613, dont l'anode est connectée au nœud 609 et dont la cathode est connectée au nœud 605 ;
- une première inductance 615, dont une borne est connectée au nœud 603 et dont l'autre borne est connectée à un nœud 617 intermédiaire ;
- une deuxième inductance 619, dont une borne est connectée au nœud 605 et dont l'autre borne est connectée à un autre nœud 621 intermédiaire ;
- une troisième diode 623, dont l'anode est connectée au nœud 617 et dont la cathode est connectée au nœud 607 ;
- une quatrième diode 625, dont l'anode est connectée au nœud 621 et dont la cathode est connectée au nœud 607 ;
- un premier transistor 627, par exemple de type métal-oxyde-semiconducteur (« Metal-Oxide-Semiconductor » - MOS, en anglais) à canal N, dont la source est connectée au nœud 609 et dont le drain est connecté au nœud 617 ; et
- un deuxième transistor 629, par exemple de type MOS à canal N, dont la source est connectée au nœud 609 et dont le drain est connecté au nœud 621.

Le pont redresseur 601 comporte en outre une capacité, par exemple un condensateur chimique 631, par exemple connecté entre les nœuds de sortie 607 et 609 du pont redresseur 601. Le condensateur 631 est par exemple destiné à lisser la tension redressée en sortie du pont 601.

Le nœud 609 est par exemple porté à un potentiel de référence, la masse dans l'exemple représenté.

Une charge 633 (L) à alimenter est par exemple connectée entre les bornes 607 et 609 du pont redresseur 601. La charge 633 reçoit une tension d'alimentation redressée et lissée en sortie du pont redresseur 601.

Dans l'exemple représenté, le pont 601 est alimenté par une source 635 de tension alternative. La source 635 comporte par exemple une borne 637 reliée au nœud d'entrée 603 du pont redresseur 601 par l'intermédiaire du circuit 401A limiteur de courant d'appel précédemment décrit en relation avec la figure 4A. Dans ce cas, le nœud 305 du circuit 401A est par exemple connecté à la borne 637 et le nœud 307 du circuit 401A est par exemple connecté au nœud 603.

Le convertisseur 600A, par exemple le pont redresseur 601, peut comporter d'autres composants ou circuits non représentés en figure 6A. Le pont 601 peut en particulier comporter un circuit de protection contre d'éventuelles surtensions (non représenté).

Le pont redresseur 601 est un exemple de pont commandé de type à modulation de largeur d'impulsion (« Pulse-Width Modulation » - PWM, en anglais) permettant de réguler l'alimentation en courant continu en fonction de la charge 633. Les transistors 627 et 629 du pont 601, équivalents ici à des interrupteurs, sont par exemple commutés entre des états ouverts et fermés à une fréquence supérieure à celle de la tension alternative d'alimentation du convertisseur 600A. À titre d'exemple, la fréquence de commutation des transistors 627 et 629 est de l'ordre de la dizaine de kilohertz. Les transistors 627 et 629 sont commutés à l'état passant lors d'alternances respectivement positives et négatives de la tension alternative d'alimentation du convertisseur 600A.

Lorsque le transistor 627, 629 est à l'état passant (équivalent à un interrupteur fermé), de l'énergie est stockée de façon temporaire dans l'inductance 615, 619 correspondante. Lorsque le transistor 627, 629 est commuté vers l'état bloqué (équivalent à un interrupteur ouvert), l'énergie stockée dans l'inductance 615, 619 est alors restituée et permet de charger, via la diode 623, 625 correspondante, la capacité 631. Chaque diode 611, 613 du pont 601 joue ici un rôle de diode de roue libre, en permettant la circulation du courant dans l'inductance 615, 619 correspondante lorsque le transistor 627, 629 associé est à l'état bloqué (interrupteur ouvert).

Le convertisseur 600A, comprenant le pont redresseur 601 et le circuit 401A de limitation de courant d'appel, présente notamment un rendement énergétique amélioré et une fiabilité accrue par rapport au convertisseur 100 de la figure 1 et par rapport aux convertisseurs 200A et 200B des figures 2A et 2B comprenant respectivement les circuits 201A et 201B ou 301A et 301B.

La figure 6B est un schéma illustrant un autre mode de réalisation d'un convertisseur 600B de tension. Le convertisseur 600B de la figure 6B comprend des éléments communs avec le convertisseur 600A de la figure 6A. Ces éléments communs ne seront pas décrits à nouveau ci-après.

Le convertisseur 600B de la figure 6B diffère du convertisseur 600A de la figure 6A principalement en ce que le convertisseur 600B ne comporte pas le circuit 401A côté courant alternatif, mais comporte le circuit 401B de la figure 4B côté courant continu. Plus précisément, dans l'exemple représenté, le circuit 401B est connecté entre le nœud 607 du pont redresseur 601 et un nœud 641. Dans ce cas, le nœud 305 du circuit 401B est par exemple connecté au nœud 607 et le nœud 307 du circuit 401B est par exemple connecté au nœud 641.

Dans l'exemple représenté, le condensateur chimique 631 et la charge 633 (L) ont chacun une borne connectée au nœud 641 et une autre borne connectée au nœud 609 d'application du potentiel de référence.

Le convertisseur 600B présente des avantages semblables à ceux du convertisseur 600A. En particulier, le convertisseur 600B présente un rendement énergétique amélioré et une fiabilité accrue par rapport aux convertisseurs existants.

Un autre avantage du convertisseur 600B tient au fait que le circuit 401B ne conduit que lorsque le transistor 627 ou 629 est à l'état ouvert. On obtient ainsi des pertes en conduction encore plus faibles que dans le circuit 401A du convertisseur 600A, où le circuit 401A conduit en permanence.

La figure 7 représente un dispositif 700 comportant un convertisseur de tension, par exemple le convertisseur 600A précédemment décrit en relation avec la figure 6A.

Le dispositif 700 est, dans l'exemple représenté, un écran de télévision, ou téléviseur. La prévision du convertisseur de tension 600A permet au téléviseur 700 de présenter une consommation électrique réduite ainsi qu'une dissipation thermique inférieure à celles d'un téléviseur qui comporterait notamment le convertisseur 200A (figure 2A) comprenant le circuit 201A ou 301A, ou le convertisseur 200B (figure 2B) comprenant le circuit 201B ou 301B. Cela permet en outre d'accroître la fiabilité et la longévité du téléviseur 700.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, les convertisseurs 600A et 600B des figures 6A et 6B peuvent respectivement mettre en œuvre les modes de réalisation des circuits 501A et 501B exposés en relation avec les figures 5A et 5B.

Enfin, la mise en œuvre pratique des modes de réalisation et variantes décrits est à la portée de la personne du métier à partir des indications fonctionnelles données ci-dessus. En particulier, le dimensionnement des éléments de redressement, notamment du triac 403, du thyristor 407 et des diodes 503, 505 et 507, est à la portée de la personne du métier.

En outre, bien que l'on ait exposé en relation avec la figure 7 un exemple d'application des modes de réalisation décrits à un téléviseur, les modes de réalisation décrits sont transposables à d'autres types de dispositifs comprenant au moins un convertisseur alternatif-continu, par exemple du type des convertisseurs 200A, 200B, 600A et 600B des figures 2A, 2B, 6A et 6B, respectivement.

La personne du métier est par ailleurs capable d'intégrer les circuits 401A et 501A des figures 4A et 5A ou les circuits 401B et 501B des figures 4B et 5B dans des convertisseurs de tension présentant une architecture et/ou des éléments de redressement différents de ceux décrits. En particulier, les modes de réalisation ne se limitent pas aux exemples de ponts redresseurs 101 et 601 décrits.

## Revendications

1. Convertisseur de tension (200A ; 200B; 600A; 600B) comportant un circuit (401A ; 501A; 401B; 501B) comprenant une association en parallèle, entre des premier (305) et deuxième (307) nœuds :
- d'une première branche comportant un premier élément (309; 311) de redressement commandé présentant une première impédance ; et
- d'une deuxième branche comportant une résistance (303) associée en série avec un ou plusieurs deuxièmes éléments (403; 503, 505; 407; 507) de redressement présentant une deuxième impédance sensiblement égale à la première impédance.

2. Convertisseur selon la revendication 1, dans lequel le premier élément (309) de redressement commandé est un premier triac.

3. Convertisseur selon la revendication 1, dans lequel le premier élément (311) de redressement commandé est un premier thyristor.

4. Convertisseur selon l'une quelconque des revendications 1 à 3, dans lequel la deuxième branche comporte un seul deuxième élément (403 ; 407 ; 507) de redressement.

5. Convertisseur selon la revendication 4, dans lequel le deuxième élément (403 ; 407) de redressement est commandé.

6. Convertisseur selon la revendication 5, dans lequel le deuxième élément (403) de redressement est un deuxième triac.

7. Convertisseur selon la revendication 6, dans lequel la gâchette (G) du deuxième triac (403) est reliée, de préférence connectée, à la deuxième anode (A2) du deuxième triac.

8. Convertisseur selon la revendication 6 ou 7, dans lequel les premier (309) et deuxième (403) triacs sont intégrés dans un même boîtier.

9. Convertisseur selon la revendication 5, dans lequel le deuxième élément (407) de redressement commandé est un deuxième thyristor.

10. Convertisseur selon la revendication 9, dans lequel la gâchette (G) du deuxième thyristor (407) est reliée, de préférence connectée, à l'anode du deuxième thyristor.

11. Convertisseur selon la revendication 4, dans lequel le deuxième élément de redressement est une diode (503 ; 507) .

12. Convertisseur selon l'une quelconque des revendications 1 à 3, dans lequel la résistance (303) est en série avec une association en antiparallèle de première (503) et deuxième (505) diodes, l'association en antiparallèle des première et deuxième diode présentant la deuxième impédance.

13. Convertisseur selon l'une quelconque des revendications 1 à 12, dans lequel la résistance (303) est destinée à dissiper des courants d'appel.

14. Convertisseur selon l'une quelconque des revendications 1 à 13, dans lequel la résistance (303) est une thermistance à coefficient de température négatif.

15. Convertisseur selon l'une quelconque des revendications 1 à 14, comportant en outre :
- un pont redresseur (101 ; 601) ; et
- un condensateur (125 ; 631).

16. Dispositif (700) comprenant un convertisseur (600A ;
600B) selon l'une quelconque des revendications 1 à 15.
